# EUROPÄISCHE PATENTSCHRIFT

(11) **EP 1 883 520 B1**
(45) Veröffentlichungstag und Bekanntmachung des Hinweises auf die Patenterteilung: **01.04.2009**
(21) Anmeldenummer: 06742389.7
(22) Anmeldetag: 26.05.2006
(51) Int. Cl.: B29C 37/00, C08G 18/18, C08G 18/38

(54) **WÄSSRIGE 2-KOMPONENTEN-LACKFORMULIERUNG UND DEREN VERWENDUNG BEI DER HERSTELLUNG VON FORMTEILEN**
AQUEOUS 2-COMPONENT PAINT FORMULATION AND USE OF THE LATTER IN THE PRODUCTION OF MOULDED PARTS
FORMULATION AQUEUSE DE PEINTURE A DEUX COMPOSANTS ET SON UTILISATION LORS DE LA PRODUCTION DE PIECES MOULEES

(30) Priorität: 27.05.2005 DE 102005024495
(43) Veröffentlichungstag der Anmeldung: 06.02.2008
(73) Patentinhaber: ISL-Chemie Gmbh&Co. Kg., 51515 Kürten-Herweg (DE)
(72) Erfinder: RIEDEL-BENDZKO, Birgit, 42499 Hückeswagen (DE); HENN, Joachim, 51709 Marienheide (DE); GRÖNEN, Jürgen, 51491 Overath (DE); BENDZKO, Norbert, 42499 Hückeswagen (DE); DÖRING, Patrik, 50354 Hürth (DE)
(74) Vertreter: Gudat, Axel
(86) Internationale Anmeldenummer: PCT/DE2006/000912
(87) Internationale Veröffentlichungsnummer: WO 2006/125432

(56) Entgegenhaltungen:
- WO-A-20/04050617
- US-A- 4 278 578
- US-B1- 6 544 449

## Beschreibung

Die Erfindung betrifft spezielle wässrige 2-Komponenten-Lackformulierungen auf Basis von Isocyanat-funktionellen Härtern und wasserverdünnbaren Harzen, die Aziridin-funktionelle Vernetzer sowie aminische Katalysatoren enthalten. Die Erfindung betrifft auch die Verwendung dieser 2-Komponenten-Lackformulierungen als ,In-Mold Coating' bei der Herstellung von Formteilen.

Automobilinnenraumteile wie beispielsweise Instrumententafeln, Türverkleidungen, Armlehnen, Kopfstützen oder Handschuhfächer bestehen heutzutage in der Regel aus einem mehrschichtigen Materialverbund, aufgebaut aus
a) einem harten Trägermaterial wie z.B. Holz, Kunststoff oder Metall
b) einer geschäumten Polyurethan-Schicht
c) einer kompakten Polyurethan-Elastomerschicht und
d) einer UV-stabile Deckbeschichtung.

So aufgebaute Automobilinnenraumteile weisen eine lederähnliche Oberflächenstruktur und einen angenehm weichen Griff auf. Eine detaillierte Beschreibung besonders vorteilhafter Herstellverfahren für Automobilinnenraumteile findet sich beispielsweise in der WO 93/23237, der EP-A 1 112 838, der WO 99/61216, der WO 98/333634.

Bei den in diesen Veröffentlichungen beschriebenen Verfahren wird in einem ersten Schritt eine Form mit der UV-stabilen Deckbeschichtung d) beschichtet. Nach Trocknung des Lackes wird die kompakte Polyurethan-Elastomerschicht c) als reaktive 2-Komponenten-Spritzbeschichtung aufgebracht. Nach der Aushärtung wird eine beschichtete RIM-Polyurethanhaut erhalten, die der Form entnommen werden kann. Dieses Verfahren der Beschichtung von geformten Teilen oder Häuten wird als ,In-Mold Coating' bezeichnet, wobei auch die verwendeten Lacke als ,In- Mold-Coatings' bezeichnet werden. Das erfindungsgemäße Verfahren umfasst insbesondere ein Verfahren mit diesen Merkmalen.

In einer Weiterführung des Herstellverfahrens wird typischerweise in einer zweiten Form (ohne dass deren Verwendung immer zwingend notwendig ist) auf die unbeschichtete Seite der Polyurethanhaut ein Polyurethanschaum b) aufgebracht, der durch Verbindung mit dem Trägermaterial a) die endgültigen Formgebung des Bauteils, insbesondere eines Automobilinnenraumteils, ergibt. Das erfindungsgemäße Verfahren umfasst insbesondere auch ein Verfahren mit diesen Merkmalen.

Für die oben genannten Verfahren geeignete In-Mold-Coatings d) zeichnen sich insbesondere durch eine gute Haftung zur Polyurethan-Elastomerschicht c) und durch eine gute Trennbarkeit von der Form aus. Besonders vorteilhaft ist es, wenn das In-Mold-Coating d) selbsttrennende Eigenschaften aufweist, so dass auf die Verwendung von externen Trennmitteln verzichtet werden kann. Weiterhin ist die Beständigkeit gegen Umwelteinflüsse wie UV-Strahlung, Wärme, Kälte, Abrieb und Chemikalien, insbesondere Reinigungsmittel, für die Qualität eines In-Mold Coatings d) wesentlich. Darüber hinaus ist es unter ökologischen Gesichtspunkten - insbesondere bei der Herstellung von Automobilteilen für den Innenraum - wichtig, dass die Beschichtungsmittel d) im wesentlichen frei von organischen Lösungsmitteln und Weichmachern sind. Die Verwendung lösemittelhaltiger Beschichtungssysteme erfordert zum einen umfangreiche und kostenintensive Maßnahmen der Abluftreinigung und zum anderen können gewisse Restmengen an Lösemittel oder Weichmacher aus der Beschichtung d) in die Elastomerschicht c) diffundieren, die dann später in den Automobilinnenraum zurückdiffundieren. Auf die Bedeutung der Verwendung wässriger In-Mold-Coatings wird speziell hingewiesen in der WO 98/333634, der WO 99/61216 oder der CA-A 2 413 493. In allen diesen Veröffentlichungen finden sich Hinweise darauf, dass insbesondere wässrige Polyurethan-Lacke aufgrund ihrer guten Haftung zur Herstellung der UV-stabilen Deckbeschichtung d) besonders geeignet sind.

Im Rahmen der technischen Realisierung der oben beschrieben Verfahren zur Serienfertigung von Automobilinnenraumteilen - insbesondere Polyurethanhäuten - hat sich aber gezeigt, dass die in den oben genannten Veröffentlichungen konkret beschriebenen wässrigen In-Mold-Coatings für die modernen Verarbeitungsverfahren der Automobilzuliefererindustrie nicht in idealer Weise geeignet sind. Das aktuelle Anforderungsprofil von beschichteten Polyurethanhäuten wird durch entsprechende Normen der Automobilindustrie spezifiziert wie beispielsweise der Daimler-Chrysler Norm DBL 5381. Die wässrigen Beschichtungssysteme des Standes der Technik genügen den Anforderungen der Automobilindustrie hinsichtlich ihrer Aushärtungsgeschwindigkeit, hinsichtlich ihrer Farbbestänigkeit und hinsichtlich ihrer chemischen Beständigkeit, insbesondere gegen Reinigungsmittel wie Glasreiniger, Fleckenentferner oder Kunststoffreiniger, nicht in vollem Umfang.

Aufgabe der vorliegenden Erfindung ist daher die Bereitstellung eines wässrigen Lacksystems zur Verwendung als In-Mold-Coating, das die Herstellung von Automobilinnenraumteilen mit verbessertem Eigenschaftsniveau bei gleichzeitig hoher Verarbeitungssicherheit und verkürzter Taktzeit gestattet.

Diese Aufgabe konnte mit der Bereitstellung der nachstehend näher beschriebenen 2-Komponenten-Lackformulierungen auf Basis von Isocyanat-funktionellen Härtern und wasserverdünnbaren Harzen, die eine Kombination von Aziridin-funktionellen Vernetzern und speziellen aminischen Katalysatoren enthalten, gelöst werden. Die Erfindung beruht auf der überraschenden Beobachtung, dass durch Zusatz Aziridin-funktioneller Vernetzer in Kombination mit speziellen aminischen Katalysatoren die Härtungsgeschwindigkeit wässriger 2Komponenten-Lacksysteme, insbesondere 2K-PUR (Polyurthan)-Lacksystemen, signifikant gesteigert werden kann, ohne nachteilig auf die Verarbeitungszeit einzuwirken.

Gegenstand der vorliegenden Erfindung sind daher wässrige 2-Komponenten-Lackformulierungen, insbesondere für das ,In-Mold-Coating'-Verfahren, enthaltend
A) 40 bis 90 Gew.-% (bezogen auf die Gesamtformulierung) mindestens einer wässrigen nichtfunktionellen oder hydroxyfunktionellen Harzdispersion,
B) 5 bis 40 Gew.-% (bezogen auf die Gesamtformulierung) mindestens einer Härterkomponente mit einem, Gehalt an freien Isocyanatgruppen von 5-30 Gew.-% bezogen auf den Festharz, vorzugsweise 10 bis 23 Gew-%,
C) Füllstoffe, Pigmente, Hilfs- und Zusatzstoffe in eine Menge, dass die Gew.-%-Angaben sich zu 100 % ergänzen.
**dadurch gekennzeichnet, dass** die Komponente A)
i) mindestens eine polyfunktionelle Aziridin-Verbindung als Vernetzer und
ii) mindestens eine Aminverbindung, die mindestens eine tertiäres Stickstoffatom und mindestens eine Hydroxylgruppe aufweist, als Katalysator enthält.

Die erfindungsgemäßen Lackformulierungen können insbesondere 2K-Polyurethanlackformulierungen sein.

Als Komponente A) enthält die erfindungsgemäße 2-Komponenten-Lackformulierung mindestens eine wässrige, nichtfunktionelle oder hydroxyfunktionelle Harzdispersion. Als Komponente A) können in den erfindungsgemäßen Beschichtungsmitteln insbesondere sämtliche in der wässrigen 2-Komponenten-Polyurethanbeschichtungstechnologie üblichen Harz-Dispersionen eingesetzt werden. Derartige wässrige Dispersionen und deren Verwendung als Bindemittel in wässrigen 2-Komponenten-Polyurethanlacksystemen sind prinzipiell bekannt. Es handelt sich beispielsweise um die üblichen wässrigen oder in Wasser dispergierbaren Polyesterharze, Polyacrylatharze, Polyurethanharze, Polyharnstoffharze oder Polycarbonatharze, wie sie beispielsweise in EP-A 358 979, EP-A 469 389, EP-A 496 205, EP-A 557 844, EP-A 583 728, WO 94/03511, WO 94/20559, WO 94/28043 und WO 95/02005 beschrieben sind. Auch der Einsatz beliebiger Mischungen verschiedener Dispersionen der genannten Harze ist möglich oder der Einsatz sogenannter Hybriddispersionen, bei denen verschiedene Bindemittel der oben genannten Art bereits während der Herstellung kombiniert werden.

Bei der Lackierung von Automobilinnenraumteilen kommen insbesondere Lacksysteme zum Einsatz die einen "Softfeel-Effekt" , d.h. ein besonderes Griffempfinden (Haptik) der lackierten Oberfläche vermitteln. Diese Haptik lässt sich mit Begriffen wie samtig, weich, gummiartig oder warm umschreiben, während sich z.B. die Oberfläche einer lackierten Auto-Karosse oder auch eine unlackierte oder mit einem üblichen Klar- oder Decklack beschichtete Kunststoff-Platte (z.B. ABS, PC, oder PMMA) kalt und glatt anfühlt. Eine geeignete Haptik lässt sich insbesondere durch den Einsatz von Polyesterdispersionen und/oder Polyurethandispersionen als Komponente A) der erfindungsgemäßen 2-Komponenten-Lackformulierung erzielen, weswegen der Einsatz von Polyesterdispersionen und/oder Polyurethandispersionen als Komponente A) bevorzugt ist. Besonders bevorzugt werden als Komponente A) Polyurethandispersionen eingesetzt.

Besonders bevorzugt als Komponente A) einsetzbare nichtfunktionelle, d.h. hydroxylgruppenfreie, Polyurethandispersionen werden beispielhaft beschrieben in der DE-A 2 651 506 (S. 6, Z. 1 - 13) oder in der DE-A 1 570 615 (S. 2, Z. 9 - S. 3, Z. 3). Weiterhin besonders bevorzugt einsetzbar als Komponente A) sind wässrige Polyester-Polyurethan-Dispersionen wie sie in der EP-A 0 496 205 oder der EP-A 0 669 352 beschrieben sind. Besonders vorteilhaft einsetzbar sind auch die in der EP-A 1418 192 beschrieben Polyurethandispersionen mit hohem Polycarbonatanteil. Diese Dispersionen sind hiermit von der Erfindung mit umfasst.

Hydroxyfunktionelle Harzdispersionen, die im Zusammenhang mit dieser Erfindung besonders vorteilhaft einsetzbar sind, die die hiermit mit umfasst sind, werden beschrieben in der EP 994 136 A1.

Bezogen auf das Gesamtgewicht der gebrauchsfertigen erfindungsgemäßen Lackformulierung beträgt die Menge an Komponente A) typischerweise 40 bis 90 Gew.-%, vorzugsweise 50 bis 80 Gew.-%, insbesondere 60-70 Gew.-%.

Als Komponente B) enthält die erfindungsgemäße 2-Komponenten Lackformulierung vorzugsweise eine Härterkomponente bestehend aus mindestens einem wasserdispergierbaren Polyisocyanat. Erfindungsgemäß als Komponente B) einsetzbare wasserdispergierbare Polyisocyanate und deren Verwendung als Härterkomponente für wasserverdünnbare 2-Komponenten-Polyurethan-Lacke sind bekannt. Geeignete Polyisocyanate werden typischerweise hergestellt durch hydrophile Modifizierung aliphatischer Lackpolyisocyanate auf Basis von Hexamethylendiisocyanat (HDI), 1-Isocyanato-3,3,5-triethyl-5-isocyanatomethyl-cyclohexan (Isophorondiisocyanat, IPDI) und/oder Bis(isocyanatocyclohexyl)-methan. Unter Lackpolyisocyanaten sind insbesondere die an sich bekannten Biuret-, Urethan-, Uretdion-, Allophanat-, und/oder Isocyanuratstrukturen aufweisenden Derivate der o.g. Diisocyanate zu verstehen, die im Anschluss an ihre Herstellung in bekannter Weise, vorzugsweise durch Destillation, von überschüssigem Ausgangsdiisocyanat bis auf einen Restgehalt von weniger als 0,5 % befreit worden sein können, ohne hierauf beschränkt zu sein. Geeignete Lackpolyisocyanate werden beispielhaft beschrieben in J. Prakt. Chem. 336 (1994) S. 185-200. Die Verfahren zur Herstellung geeigneter Lackpolyisocyanate werden beispielhaft beschrieben in den US-Patentschriften 3 124 605, 3 358 010, 3 903 126, 3 903 127, 3 976 622 oder 4 324 879.

Die hydrophile Modifizierung der Lackpolyisocyanate kann anionisch, kationisch oder nichtionisch über interne oder externe Emulgatoren erfolgen. Hydrophil modifizierte Polyisocyanate werden z.B. in den Patentschriften EP-A 443 138, EP-A 469 389, EP-A 486 881, EP-A 510 438, EP-A 540 985, EP-A 645 410, EP-A 697 424 oder EP-A 728 785 beschrieben.

Eine Hydrophilierung der Polyisocyanate ist z.B. durch Umsetzung mit in Bezug auf die Isocyanatgruppen unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z 55 - S. 4 Z. 5) beschrieben. Gut geeignet sind auch die in der EP-A-0 959 087 (S. 3 Z. 39 - 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden können, sowie mit ionischen Gruppen hydrophilierte Polyisocyanate, wie sie z.B. in der EP-A 1 287 052-A1 beschrieben sind. Ebenso möglich ist die Hydrophilierung durch Zusatz handelsüblicher externer Emulgatoren der in der EP-A 835 889 beispielhaft genannten Art. Weiterhin ist es möglich, Gemische hydrophil modifizierter Lackpolyisocyanate mit unmodifizierten Lackpolyisocyanaten einzusetzen. In diesen Gemischen übernehmen die hydrophil modifizierten Lackpolyisocyanate die Funktion eines externen Emulgators.

Bezogen auf das Gesamtgewicht der gebrauchsfertigen erfindungsgemäßen Lackformulierung beträgt die Menge an Komponente B) typischerweise 5 bis 40 Gew.-%, vorzugsweise 10 bis 30 Gew.-%, besonders bevorzugt 15 bis 25 Gew.-%.

Die erfindungsgemäße Lackformulierung enthält vorzugsweise weniger als 10-20 Gew.-%, besonders bevorzugt ≤ 8 Gew.-% oder ≤ 5 Gew.-% (bezogen auf die Gesamtformulierung) Füllstoffe, Pigmente, Hilfs- und Zusatzstoffe in Summe. Unter Umständen kann die Formulierung somit auch mehr als 5 Gew.-% der genannten Stoffe enthalten.

Die erfindungsgemäßen Lackformulierungen enthalten als Komponente C) die aus der wässrigen Lacktechnologie an sich bekannten Füllstoffe, Pigmente, Hilfs- und Zusatzstoffe in einer Menge von beispielsweise 1-20 Gew.-%, vorzugsweise 3-10 Gew.-%, besonders bevorzugt 2-5 Gew.-% bezogen auf das Gesamtgewicht der gebrauchsfertigen Lackformulierung. Dies sind beispielsweise organische und anorganische Pigmente, gegebenenfalls. oberflächenbehandelte Füllstoffe, Trennmittel, Entschäumer, Verdicker, Verlaufshilfsmittel, Mattierungsmittel, Dispergierhilfsmittel, Stabilisatoren und/oder Hydrolyseschutzmittel der in der Lacktechnologie allgemein bekannten Art. Farbgebende Pigmente werden vorzugsweise in Form von Farbpasten verwendet. Auch organische Lösungsmittel können in untergeordneten Mengen bei der Herstellung der erfindungsgemäßen Lackformulierungen mitverwendet werden. Dies sind insbesondere die in der wässrigen Lacktechnologie bekannten Colöser wie z.B. N-Methylpyrolidon, Propylenglykoldiacetat oder Methoxypropylacetat.

Besonders bevorzugte Lackformulierungen sind selbsttrennend ausgerüstet und enthalten mindestens ein internes Trennmittel, so dass auf die Ausrüstung der Form mit externen Trennmitteln verzichtet werden kann. Geeignete Trennmittel sind alle für wässrige Lacksysteme beschriebenen Trennmittel auf Wachs- und/oder Silikon basis, insbesondere solche der in der WO 99/61215 näher beschriebenen Art.

Vorzugsweise ergänzen sich die Gehalte der Komponenten A), B) und C) zu 100 Gew.- %.

Die erfindungsgemäße Lackformulierung ist vorzugsweise im wesentlichen oder vollständig frei von organischen Lösungsmitteln und Weichmachern, beispielsweise sind diese jeweils oder in Summe zu weniger als 1-2 Gew.-% oder weniger als 0,1 bis 0,5 Gew.-% in der Formulierung enthalten.

Die Komponente A) kann einen Wassergehalt von ≥ 5-10 Gew.-%, beispielsweise ≥ 20 oder ≥ 30 Gew.-% aufweisen, insbesondere ca. 50-60 Gew.-%. Die Lackformulierung kann einen Wassergehalt von ≥ 5-10 Gew.-%, beispielsweise ≥ 20 oder ≥ 30 Gew.-% aufweisen.

Üblicherweise werden die verschiedenen Bestandteile der Komponente C) mit Hilfe der in der Lacktechnologie üblichen Verfahren, wie z.B. Dispergierung in die Komponente A) eingearbeitet, wobei der sog. Stammlack entsteht. Prinzipiell ist es aber auch möglich, bestimmte Bestandteile der Komponente C) in die Komponente B) einzuarbeiten.

Im Rahmen der vorliegenden Erfindung wurde die überraschende Beobachtung gemacht, dass die Härtungsgeschwindigkeit von wässrigen 2-Komponenten-Lacken, insbesondere 2-Komponenten-Polyurethanlacken, signifikant gesteigert werden kann, wenn diese Lacke eine Kombination von polyfunktionellen Aziridinvernetzern und speziellen, aminischen Reaktivkatalysatoren enthalten. Es wurde gefunden, dass diese Kombination synergistisch auf die Vernetzungsgeschwindigkeit einwirkt und bisher nicht bekannte Härtungsgeschwindigkeiten ermöglicht, ohne aber nachteilige Effekte auf die Verarbeitungs- bzw. Standzeit der Lacke auszuüben oder diese nur wenig zu beeinflussen. Diese Beobachtung ist auch im Lichte der jüngst bekannt gewordenen WO 2004050617 überraschend, da im Rahmen dieser Veröffentlichung nur Kombinationen von nichtreaktiven aminischen Katalysatoren mit polyfunktionellen Aziridinvernetzern beschrieben werden, wobei lediglich die stabilisierende Wirkung der aminischen Katalysatoren für die Aziridinvernetzer in nichtwässrigen Systemen beschrieben wird. Hinweise auf eine synergistische katalytische Wirksamkeit der nachstehend näher beschriebenen polyfunktionellen Aziridinverbindungen mit den nachstehend näher beschriebenen Reaktivkatalysatoren in wässrigen 2-Komponenten-Polyurethanlacken können der WO 2004050617 nicht entnommen werden.

Die synergistische katalytische Wirksamkeit der erfindungsgemäß einsetzbaren polyfunktionellen Aziridinverbindungen mit den erfindungsgemäß einsetzbaren Reaktivkatalysatoren in wässrigen 2-Komponenten-Polyurethanlacken wird im Rahmen der weiter hinten angeführten Beispiele belegt.

Polyfunktionelle Aziridinverbindungen i), wie sie in die in der erfindungsgemäßen Lackformulierung eingesetzt werden, sind an sich bekannt. Erfindungsgemäß geeignete Aziridinverbindungen werden bereits seit geraumer Zeit zur Vernetzung von lösemittelhaltigen und auch wässrigen Lacksystemen, insbesondere von Lacksystemen auf Basis carboxylfunktioneller Harze, eingesetzt und verbessern als Bestandteil der Lackformulierung insbesondere die Lösemittel- und Abriebbeständigkeit. Erfindungsgemäß einsetzbare Aziridinverbindungen werden beispielhaft beschrieben in den Patentanmeldungen U.S. 2,596,299, U.S. Pat. No. 3,789,034, U.S. 4,563,307, U.S. 2,596,200, U.S. 3,165,375, US 3,197,463, U.S. 3,285,798, U.S. 3,338,885, U.S. 3,597,146, U.S. 3,726,862 oder U.S. 4,278,578, die hiermit in ihrem Offenbarungsgehalt mit umfasst sind.

Erfindungsgemäß einsetzbare Aziridinverbindungen i) werden vorzugsweise ausgewählt aus der Gruppe bestehend aus den Michael-Additionsprodukten von unsubstituiertem oder gegebenenfalls substituiertem Ethylenimin an Ester von mehrwertigen Alkoholen mit a,β-ungesättigten Carbonsäuren und den Additionsprodukten von unsubstituierten oder gegebenenfalls substituiertem Ethylenimin an Polyisocyanaten. Die Alkohole können insbesondere zwei oder dreiwertig sein. Die Alkohole können gesättigt sein oder Phenole darstellen.

Geeignete Alkoholkomponenten zur Veresterung mit den a,β-ungesättigten Carbonsäuren sind beispielsweise Trimethylolpropan, Neopentylglykol, Glycerin, Pentaerythrit, 4,4'-Isopropylidendiphenol und 4,4'-Methylendiphenol. Als a,β-ungesättigte Carbonsäuren kommen beispielsweise Acryl- und Methacrylsäure, Crotonsäure und Zimtsäure in Frage. Besonders bevorzugt enthält die erfindungsgemäße Lackformulierung Acrylsäureester. Die korrespondierenden mehrwertigen Alkohole der α,β-ungesättigten Carbonsäureester können gegebenenfalls Alkohole sein, die an ihren OH-Funktionen teilweise oder vollständig mit Alkylenoxiden einfach oder mehrfach verlängert sind. Hierbei kann es sich beispielsweise um die mit Alkylenoxiden einfach oder mehrfach verlängerten oben genannten Alkohole gemäß der Lehre der amerikanischen Patentschrift US 4,605,698 handeln, die hiermit in ihrem Offenbarungsgehalt mit umfasst sind..

Beispiele für erfindungsgemäß bevorzugt einsetzbare Aziridine i) sind Trimethylolpropantris-(betaaziridino)-propionat, Neopentylglykoldi-(beta-aziridino)-propionat, Glycerintris-(betaaziridino)-propionat, Pentaerythrittetra-(beta-aziridino)-propionat, 4,4'-Isopropylidendiphenoldi-(beta-aziridino)-propionat, 4,4'-Methylen-diphenoldi-(beta-aziridino)-propionat, 1,6-Hexamethylendi-(N,N-ethylenharnstoff), 4,4'-Methylen-bis-(phenyl-N,N-ethylenharnstoff), 1,3,5-Tris-(cohexamethylen-N,N-ethylen-harnstoff)-biuret und Gemische davon. Die Aziridine können somit insbesondere beta-Aziridine oder Aziridine vom Biuret-Typ sein. Die polyfunktionellen Aziridinverbindungen i) können gegebenenfalls an ihren Aziridineinheiten substituiert sein.

Die polyfunktionellen Aziridinverbindungen i) werden erfindungsgemäß vorzugsweise in einer Menge von 0,5 Gew.-% bis 3,0 Gew.-%, besonders bevorzugt 0,7 Gew.-% bis 1,5 oder 2,0 Gew.-%, (bezogen auf das Gesamtgewicht der Komponente A) eingesetzt. Gegebenenfalls kann die mindestens eine Aziridinverbindung auch in einer Menge von 0,1 bis < 0,5 Gew,-% oder > 3,0 bis 5,0 Gew.-% eingesetzt werden.

Die mindestens eine Aminverbindung ii) der Komponente A), die als Reaktivkatalysator fungiert, wird erfindungsgemäß vorzugsweise in einer Menge von 0,2 Gew.-% bis 2,0 Gew.-%, besonders bevorzugt vorzugsweise 0,5 Gew.-% bis 1,5 Gew.-%, (bezogen auf das Gesamtgewicht der Komponente A) eingesetzt. Gegebenenfalls kann die mindestens eine Aminverbindung auch in einer Menge von 0,1 bis < 0,2 Gew,-% oder > 2,0 bis 5,0 Gew.-% eingesetzt werden.

Geeignete aminische Katalysatoren ii) enthalten mindestens ein tertiäres Stickstoffatom und mindestens eine Hydroxylgruppe, gegebenenfalls auch zwei, drei oder mehr Hydroxylgruppen. Derartige Katalysatoren sind aus der Polyurethantechnologie prinzipiell bekannt und werden üblicherweise als Reaktivkatalysatoren bezeichnet. Beispiele für geeignete Katalysatoren sind Alkylalkanolamine abgeleitet von Ethanolamin, Propanolamin oder iso-Propanolamin wie N-Methyl- oder N-Ethyldiethanolamin, N,N-Dimethyl- oder N,N-Diethylethanolamin, N-Methyldipropanolamin, N-Methyldiisopropanolamin, N,N-Dimethylpropanolamin oder N,N-Dimethylisopropanolamin. Erfindungsgemäß einsetzbar als Komponente i) ist weiterhin 2-(2-Dimethylaminoethoxy)ethanol.

Bevorzugt einsetzbare aminische Katalysatoren ii) weisen mindestens zwei tertiäre Stickstoffatome und mindestens eine Hydroxylgruppe auf, beispielsweise auch zwei, drei oder mehr. Der aminische Katalysator kann gegebenenfalls jeweils auch 3 oder mehr tertiäre Stickstoffatome aufweisen. Die aminischen Verbindungen weisen vorzugsweise ein Molekulargewicht von größer/gleich 140g/mol auf. Beispiele für bevorzugt einsetzbare Katalysatoren sind N-(3-Dimethylamino-propyl)-N,N-diisopropanolamin, N,N,N'-Trimethyl-N'-hydroxyethyl-bisaminoethylether, N,N-bis(3-dimethylaminopropyl)-N-isopropanolamin, oder N,N,N'-trimethylaminoethyl-ethanolamin-ethylendiamin. Die Verwendung von N,N-bis(3-dimethylaminopropyl)-N-isopropanolamin als Aminverbindung ii) ist besonders bevorzugt.

Es versteht sich, dass die Komponenten i) und ii) jeweils eine oder ein Gemisch mehrerer der genannten Verbindungen enthalten kann.

Die Herstellung der gebrauchsfertigen wässrigen Beschichtungssysteme erfolgt üblicherweise so, dass die Komponenten i) und ii) der Komponente A) nach oder während der Herstellung des Stammlackes zugesetzt werden. Der Stammlack weist in der gebrauchsfertigen Form eine ausgezeichnete Lagerstabilität bei Raumtemperatur (20°C) von ca. 6 Monaten auf.

Vorzugsweise wird unmittelbar vor der Applikation wird die Polyisocyanat-Komponente B) in den Stammlack eingearbeitet. In Abhängigkeit von der Hydrophilie der Komponente B) kann es dabei vorteilhaft sein, zunächst unter Scherung eine wässrige Dispersion der Komponente B) herzustellen und diese dann mit dem Stammlack zu vermischen. Nach Vermischen des Stammlacks mit der Komponente B) hat der Lack eine Verarbeitungszeit von ca. 3-6 Stunden. Die Vermischung kann dabei entweder manuell oder aber bevorzugt unter Verwendung konventioneller Mischaggregate erfolgen.

Die erfindungsgemäßen Lacksysteme sind aufgrund ihrer schnellen Härtungsgeschwindigkeit hervorragend zur Verwendung als ,In-Mold Coating' geeignet. Gegenstand der vorliegenden Erfindung ist deshalb auch die Verwendung derartiger 2-Komponenten-Lackformulierungen als ,In-Mold-Coating' zur Herstellung von Formteilen insbesondere von Automobilteilen, bevorzugt zur Herstellung von Automobilinnenraumteilen.

Im erfindungsgemäßen Verfahren erfolgt das Aufbringen der erfindungsgemäßen Lackformulierungen auf die Form durch Spritzapplikation mit Hilfe von Robotern oder konventionellen Spritzpistolen. Die Trocknung des Lackes erfolgt durch kurzzeitige Erwärmung auf Temperaturen von maximal 80°C, bevorzugt maximal 70°C, bei geschlossener FormDie Trocknungszeit ist extrem kurz. Durch die erfindungsgemäße Lackformulierung kann die Trockungszeit nach Aufbringung einer Lackierung von 10 bis 100 µm, typischerweise 30 bis 60 µm, beispielsweise ca. 50 µm in die Form und nach einer geeigneten Ablüftzeit üblicherweise nicht mehr als 4 Minuten betragen, bevorzugt nicht mehr als 3 Minuten, beispielsweise ca. 2 Minuten. Die Ablüftzeit kann bei stehender Luft und bei geschlossener Form vorzugsweise nicht mehr als 150 oder 200 sec, beispielsweise 100 sec betragen. Nach der Trocknung des ,In-Mold Coatings' kann beispielsweise im Rahmen des RIM-Verfahrens eine schnellreagierende kompakte oder schäumende Polyurethanformulierung des Standes der Technik oder gegebenenfalls auch eine andere Kunststoffformulierung in die lackierte Form eingebracht und durch Wärmebehandlung zu einem Formteil ausgehärtet werden. Nach Aushärtung kann das lackierte Formteil entnommen werden und seiner weiteren Verwendung zugeführt werden. Hierdurch können Formteile mit fehlerloser Oberfläche hergestellt werden.

Bevorzugt werden die erfindungsgemäßen Lackformulierungen aber zur Herstellung von Polyurethan-Häuten verwendet. Das Verfahren zur Herstellung solcher Polyurethan-Häute zur Verwendung im Automobilinnenraum entspricht dem Stand der Technik und erfolgt analog der in den WO 93/23237, EP-A 1 112 838, WO 99/61216 und WO 98/333634 beschriebenen Verfahren. Die unter Verwendung der erfindungsgemäßen Lackformulierungen erhaltenen Polyurethan-Häute haben eine optisch vollkommen homogene Oberfläche und weisen einen angenehmen Griff auf. Die Oberfläche besitzt eine gute Alterungs- Abrieb und UV-Beständigkeit sowie eine hervorragende Beständigkeit gegenüber Reinigungsmitteln wie Glasreinigern, Fleckenentfernern oder Kunststoffreinigern.

Das Wesen der Erfindung wird durch die nachfolgenden Beispiele näher erläutert.

### Beispiele:

In den nachfolgenden Beispielen beziehen sich alle Angaben in Teilen oder % auf das Gewicht. Der pigmentierte Stammlack wird durch sukzessives Vermischen der Komponenten bei niedriger Rührgeschwindigkeit in einem handelsüblichen Dissolver hergestellt.

Die Isocyanatkomponente wurde dem pigmentierten Stammlack unmittelbar vor der Verarbeitung zugesetzt und durch Vermischen bei niedriger Rührgeschwindigkeit in einem handelsüblichen Dissolver eingearbeitet.

### Beispiel 1 (erfindungsgemäß)

### Herstellung einer 2-Komponenten Lackformulierung auf Basis eines nichtfunktionellen Bindemittels:

Herstellung eines Stammlackes

| | |
|---|---|
| 87,5 % | Alberdingk U 420 (handelsübliches Lackbindemittel der Fa. Alberdingk & Boley, Krefeld, Festkörpergehalt 40%) |
| 0,3 % | Butylglykol |
| 0,3% | Hexylglykol |
| 1,8 % | deionisiertes Wasser |
| 0,2 % | Foamex 825 (handelsüblicher Entschäumer der Fa. Goldschmidt) |
| 1,0% | Jeffcat ZR 50 (N,N-bis(3-dimethylaminopropyl)-N-isopropanolamin, Katalysator der Fa. Huntsman, Everberg, Belgien) |
| 2,9% | Mattierungspaste auf Basis Acemat OK 412 der Fa.Degussa |
| 1,0 % | Crosslinker CX100 (trifunldioneller Polyaziridinvernetzer der Fa. Neoresins, Waalwijk, Niederlande) |
| ca. 5% | deionisiertes Wasser (Verarbeitungsviskosität =15 sec (Fordbecher, 4mm)) |

Herstellung eines erfindungsgemäßen In-Mold-Coatings

Zur Herstellung eines ezfindungsgemässen In-Mold-Coatings wurde der Stammlack mit 8 Gew.-% einer grauen Pigmentpräparation auf Basis von Ruß und Titandioxid pigmentiert.

100 Gew.-Teile des so hergestellten Stammlackes wurden mit 20 Gew.-Teilen eines handelsüblichen wasserdispergierbaren Polyisocyanatgemisches auf Basis Hexamethylendiisocyanat (Bayhydur LS 2319 der Bayer AG, Leverkusen, 66%ige Lösung in Methoxypropylacetat, NCO-Gehalt = 12,0 %) vermischt. Der Lack hatte eine Verarbeitungszeit von 300 Minuten (23°C).

Eine mit Trennmittel (Acmos 3641-82 der Fa. Acmos Chemie Bremen) beschichtete Form (Formtemperatur 80°C) wurde durch Spritzauftrag mit dem frisch hergestellten erfindungsgemäßen In-Mold-Coating beschichtet, so dass eine Trockenfilmstärke von 30-60 µm resultierte.

Zur Herstellung einer Polyurethanhaut wurde nach einer Ablüftzeit von 100 Sekunden ein handelsübliches 2-Komponenten-Polyurethan-System zur Herstellung von Polyurethanhäuten (Elastoskin 4639/107 mit ISO 134/31 der Fa. Elastogran, Lemförde) in die Form eingebracht und die Form wurde geschlossen. Nach 120 Sekunden konnte die lackierte Haut problemlos entnommen werden.

Die Abprüfung der so hergestellten Haut erfolgte in Anlehnung an die Richtlinie DBL 5381.

Die Prüfergebnisse sind in Tabelle 1 zusammengestellt.

### Beispiel 2 (erfindungsgemäß)

### Herstellung einer 2-Komponenten Lackformulierung auf Basis eines nichtfunktionellen Bindemittels:

Der Stammlack wurde wie in Beispiel 1 beschrieben hergestellt, als Katalysator wurden aber 0,8 % Jeffcat DPA (3-Dimethylaminopropylamino-1,1'-bis-(propan-2-ol) Katalysator der Fa. Huntsman, Everberg, Belgien) anstelle von Jeffcat ZR 50 eingesetzt.

Zur Herstellung eines erfindungsgemässen In-Mold-Coatings wurde der Stammlack mit 8 Gew.-% einer grauen Pigmentpräparation auf Basis von Ruß und Titandioxid pigmentiert.

100 Gew.-Teile des so hergestellten Stammlackes wurden mit 18 Gew.-Teilen eines handelsüblichen wasserdispergierbaren Polyisocyanatgemisches auf Basis Hexamethylendiisocyanat (Bayhydur 3100 der Bayer AG, Leverkusen, 66%ige Lösung in Methoxypropylacetat, NCO-Gehalt = 11,5%) vermischt. Der Lack hatte eine Verarbeitungszeit von 240 Minuten (23°C).

Die Herstellung einer beschichteten Polyurethanhaut erfolgte wie in Beispiel 1 beschrieben.

Die Prüfergebnisse sind in Tabelle 1 zusammengestellt.

### Beispiels 3 (erfindungsgemäß)

### Herstellung einer 2-Komponenten Lackformulierung auf Basis eines OH-funktionellen Bindemittels:

### Herstellung eines Stammlacks

| | |
|---|---|
| 76 % | Synthoester DSP-2002-248 |
| | (wässriges OH-funktionelles Bindemittel der Fa. Synthopol Chemie, Buxtehude auf Polyester-Polyurethanbasis, OH-Zahl 67) |
| 0,3 % | Butylglycol |
| 0,3 % | Hexylglykol |
| 8,9 % | deionisiertes Wasser |
| 0,2 % | Foamex 825 (handelsüblicher Entschäumer der Tego Chemie Service GmbH, Essen) |
| 1,0 % | Jeffcat ZR 50 (N,N-bis(3-dimemylaminopropyl)-N-isopropanolamin, Katalysator der Fa. Huntsman, Everberg, Belgien) |
| 2,9 % | Mattierungspaste Acemat OK 412 der Fa. Degussa |
| 1,0 % | Crosslinker CX100 (trifunktioneller Polyaziridinvernetzer der Fa. Neoresins, Waalwijk, Niederlande) |
| 2,0 % | wässriges Trennmittel hergestellt gemäß WO 9961215, Beispiel 2 |
| ca. 7,4 % | deionisiertes Wasser (Verarbeitungsviskosität =15 sec (Fordbecher, 4mm)), |

Zur Herstellung eines erfindungsgemässen In-Mold-Coatings wurde der Stammlack mit 8 Gew.-% einer grauen Pigmentpräparation auf Basis von Ruß und Titandioxid pigmentiert.

100 Gew.-Teile des so hergestellten pigmentierten Stammlackes wurden mit 18 Gew.-Teilen eines handelsüblichen wasserdispergierbaren Polyisocyanatgemisches auf Basis Hexamethylendiisocyanat (Bayhydur 3100 der Bayer AG, Leverkusen, 66 %ige Lösung in Methoxypropylacetat, NCO-Gehalt = 11,5%) vermischt. Der Lack hatte eine Verarbeitungszeit von 300 Minuten (23°C).

Die Herstellung einer beschichteten Polyurethanhaut erfolgte wie in Beispiel 1 beschrieben, jedoch wird die Form nicht mit einem Trennmittel beschichtet. Die beschichtete Polyurethanhaut konnte nach Aushärtung unter den Bedingungen des Beispiels 1 (Formtemperatur 80°C, Ablüftzeit 100 sec, Aushärtungszeit 120 sec) problemlos entnommen werden.

Die Prüfergebnisse sind in Tabelle 1 zusammengestellt.

### Beispiel 4

### Nicht erfindungsgemäßes Vergleichsbeispiel

Es wurde ein Stammlack gemäß Beispiel 1 hergestellt, es wurde jedoch kein Aziridinvemetzer zugesetzt.

Die Vernetzung des Stammlacks mit dem Polyisocyanatgemisch und die Herstellung der Polyurethanhaut erfolgte wie in Beispiel 1 beschrieben. Der Lack hatte eine Verarbeitungszeit von 300 Minuten (23°C).

Nach Aushärtung unter den Bedingungen des Beispiels 1 (Formtemperatur 80°C, Ablüftzeit 100 sec, Aushärtungszeit 120 sec) war der Lack noch nicht ausgehärtet, bei Entnahme der Polyurethanhaut kam es zur partiellen Lackablösung. Nach Erhöhung der Formtemperatur auf 100°C wurde die Herstellung der Polyurethanhaut wiederholt. Die Prüfergebnisse sind in Tabelle 1 zusammengestellt.

### Beispiel 5

### Nicht erfindungsgemäßes Vergleichsbeispiel .

Es wurde ein Stammlack gemäß Beispiel 1 hergestellt, es wurde jedoch ein hydroxylgruppenfreier, aminischer Katalysator, (TD-33A, Triethylendiamin, 33 %ig gelöst in Dipropylenglykol der Fa. Huntsman, Everberg, Belgien) verwendet.

Die Vernetzung des Stammlacks mit dem Polyisocyanatgemisch und die Herstellung der Polyurethanhaut erfolgte wie in Beispiel 1 beschrieben. Der Lack hatte eine Verarbeitungszeit von 90 Minuten (23°C).

Nach Aushärtung unter den Bedingungen des Beispiels 1 (Formtemperatur 80°C, Ablüftzeit 100 sec, Aushärtungszeit 120 sec) war der Lack noch nicht ausgehärtet, bei Entnahme der Polyurethanhaut kam es zur partiellen Lackablösung. Nach Erhöhung der Formtemperatur auf 100°C wurde die Herstellung der Polyurethanhaut wiederholt. Die Prüfergebnisse sind in Tabelle 1 zusammengestellt.

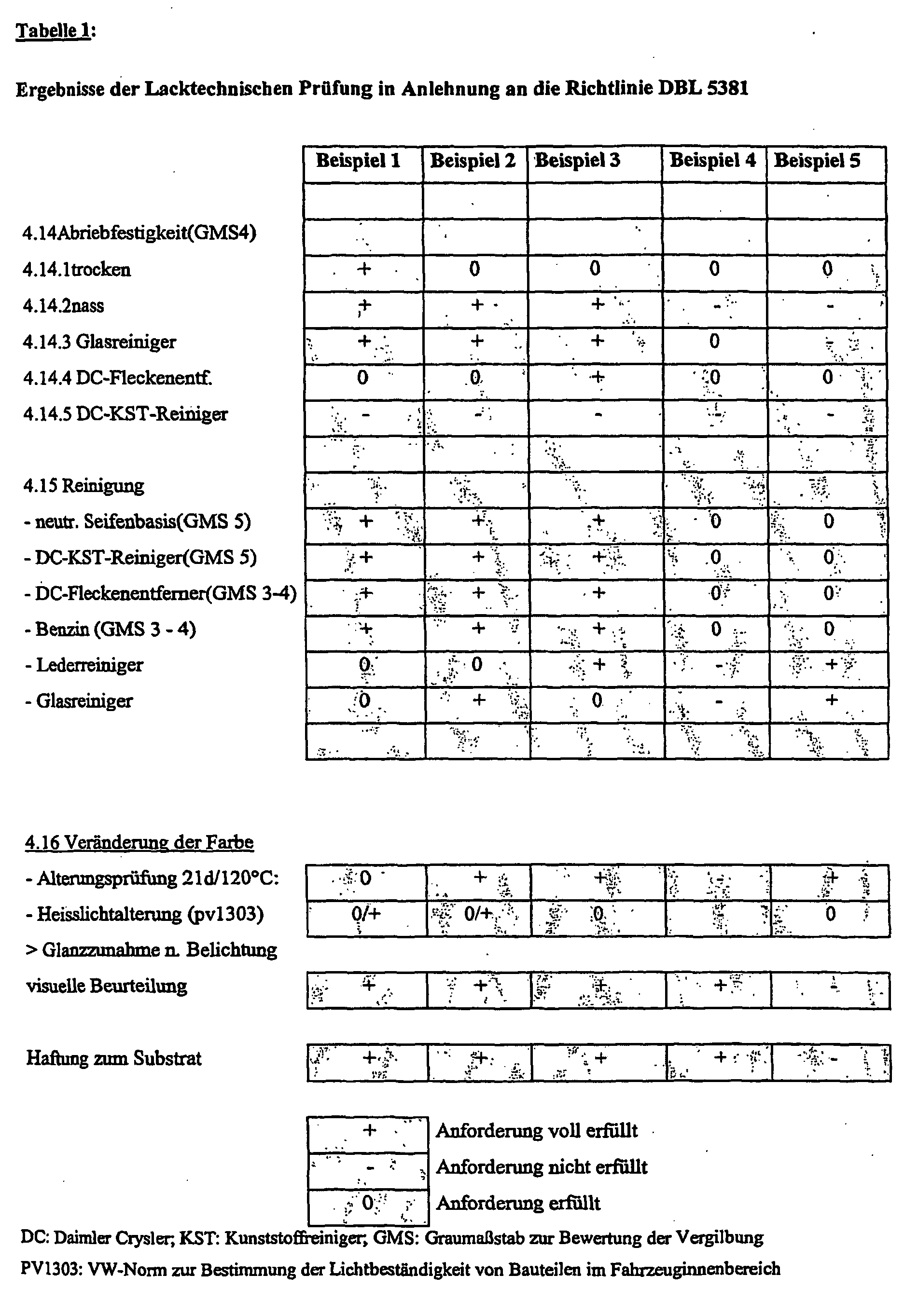

## Patentansprüche

1. 2-Komponenten-Lackförmulierung enthaltend
A) 40 bis 90 Gew.-% (bezogen auf die Gesamtformulierung) mindestens einer wässrigen nichtfunktionellen oder hydroxyfunktionellen Harzdispersion
B) 5 bis 40 Gew.-% (bezogen auf die Gesamtformulierung) mindestens einer Härterkomponente mit einem Gehalt an freien Isocyanatgruppen von 10 bis 23 Gew-% (bezogen auf das Festharz),
C) Füllstoffe, Pigmente, Hilfs- und Zusatzstoffe in einer Menge, dass die Gew.-%-Angaben sich zu 100% ergänzen
**dadurch gekennzeichnet, dass** die Komponente A)
i) mindestens eine polyfunktionellen Aziridin-Verbindung als Vernetzer und
ii) mindestens eine Aminoverbindung, die mindestens ein tertiäres Stickstoffatom und mindestens eine Hydroxylgruppe aufweist, als Katalysator enthält.

2. 2-Komponenten-Lackformulierung gemäß Anspruch 1, **dadurch gekennzeichnet, dass** die Komponente A) einen Polyaziridinvernetzer i) mit mindestens 3 Aziridingruppen pro Molekül enthält.

3. 2-Komponenten Lackformulierung gemäß Anspruch 1 oder 2, **dadurch gekennzeichnet, dass** die Aziridin-Verbindung i) in einem Gehalt von 0,5 bis 3,0 Gew.-% (bezogen auf Gesamtgewicht der Komponente A) vorliegt.

4. 2-Komponenten Lackformulierung gemäß einem der Ansprüche 1 bis 3, **dadurch gekennzeichnet, dass** die Komponente A) eine Aminverbindung ii) mit mindestens 2 Stickstoffatomen pro Molekül als Katalysator enthält.

5. 2-Komponenten Lackformulierung gemäß einem der Ansprüche 1 bis 4, **dadurch gekennzeichnet, dass** die Aminverbindung ii) ein Molekulargewicht von mindestens 140u aufweist.

6. 2-Komponenten Lackformulierung gemäß einem der Ansprüche 1 bis 5, **dadurch gekennzeichnet, dass** die Aminverbindung ii) in einem Gehalt von 0,2 bis 2,0 Gew.-% (bezogen auf Gesamtgewicht der Komponente A) vorliegt.

7. Verfahren zur Herstellung von Formteilen im In-Mold-Coating-Verfahren, **dadurch gekennzeichnet dass** als In-Mold-Coating-Lack eine Lackformulierung gemäß einem der Ansprüche 1 bis 6 verwendet wird.

8. Verfahren zur Herstellung von Formteilen im In-Mold-Coating-Verfahren nach Anspruch 7, **dadurch gekennzeichnet dass** als In-Mold-Coating-Lack eine Lackformulierung gemäß einem der Ansprüche 1 bis 6 in einer Schichtdicke von 10 bis 100 µm (bezogen auf die Trockenfilmstärke) auf eine Formoberfläche mit einer Temperatur von 60-80°C aufgebracht wird, und nach einer geeigneten Ablüftzeit und nach einer sich anschließenden Trockungszeit bei geschlossener Form von nicht mehr als 4 Minuten eine Polyurethan-Elastomerschicht oder eine andere Schicht eines Kunststoffmaterials auf die Lackschicht aufgebracht wird, die gegebenenfalls nach weiterem Schichtaufbau oder Verfahrensschritten zusammen mit der Lackschicht der Form entnommen wird.

9. Verfahren zur Herstellung von Automobilinnenraumteilen mit einer In-Mold-Beschichtung oder In-Mold-Schicht eines Lackes, **dadurch gekennzeichnet dass** als In-Mold-Coating-Lack eine Lackformulierung gemäß einem der Ansprüche 1 bis 6 verwendet wird.

10. Verfahren zur Herstellung von Polyurethan-Häuten mit einer In-Mold-Beschichtung eines Lackes, **dadurch gekennzeichnet dass** als In-Mold-Coating-Lack eine Lackformulierung gemäß einem der Ansprüche 1 bis 6 verwendet wird.

11. Polyurethan-Haut, beschichtet mit einer Lackformulierung nach einem der Ansprüche 1 bis 6.

12. Formteil, erhältlich durch Beschichten mit einer Lackformulierung nach einem der Ansprüche 1 bis 6 im In-Mold-Coating-Verfahren.

## Claims

1. A two-component lacquer formulation containing
A) 40 to 90 wt.% (based on the total formulation) of at least one aqueous non-functional or hydroxy functional resin dispersion,
B) 5 to 40 wt.% (based on the total formulation) of at least one hardener component with a content of free isocyanate groups of 10 to 23 wt.% (based on the solid resin),
C) fillers, pigments, auxiliary agents and additives in an amount such that the percentages by weight add up to 100%,
**characterised in that** component A)
i) contains at least one polyfunctional aziridine compound as a cross-linking agent and
ii) at least one amine compound, which has at least one tertiary nitrogen atom and at least one hydroxyl group, as a catalyst.

2. A two-component lacquer formulation according to claim 1, **characterised in that** component A) contains a polyaziridine cross-linking agent i) with at least 3 aziridine groups per molecule.

3. A two-component lacquer formulation according to claim 1 or 2, **characterised in that** the aziridine compound i) is present in an amount of 0.5 to 3.0 wt.% (based on the total weight of component A).

4. A two-component lacquer formulation according to any one of claims 1 to 3, **characterised in that** component A) contains an amine compound ii) with at least 2 nitrogen atoms per molecule as a catalyst.

5. A two-component lacquer formulation according to any one of claims 1 to 4, **characterised in that** the amine compound ii) has a molecular weight of at least 140u.

6. A two-component lacquer formulation according to any one of claims 1 to 5, **characterised in that** the amine compound ii) is present in an amount of 0.2 to 2.0 wt.% (based on the total weight of component A).

7. A method of manufacturing moulded parts by an in-mould coating process, **characterised in that** a lacquer formulation according to any one of claims 1 to 6 is used as an in-mould coating lacquer.

8. A method of manufacturing moulded parts by an in-mould coating process according to claim 7, **characterised in that** a lacquer formulation according to any one of claims 1 to 6 is used as an in-mould coating lacquer and is applied in a layer thickness of 10 to 100 µm (based on the dry film thickness) to a mould surface at a temperature of 60-80°C, and after a suitable venting time and after a subsequent drying time, with closed mould, of not more than 4 minutes a polyurethane elastomer layer or another layer of a plastics material is applied to the lacquer layer and, optionally after a further build-up of layers or further method steps, is removed from the mould together with the lacquer layer.

9. A method of manufacturing automobile interior parts with an in-mould coating or in-mould layer of a lacquer, **characterised in that** a lacquer formulation according to any one of claims 1 to 6 is used as an in-mould coating lacquer.

10. A method of manufacturing polyurethane skins with an in-mould coating of a lacquer, **characterised in that** a lacquer formulation according to any one of claims 1 to 6 is used as an in-mould coating lacquer.

11. A polyurethane skin, coated with a lacquer formulation according to any one of claims 1 to 6.

12. A moulded part, obtainable by coating with a lacquer formulation according to any one of claims 1 to 6 in an in-mould coating process.

## Revendications

1. Formulation aqueuse de peinture à deux composants, contenant :
A) 40 à 90 % en poids (par rapport au poids total de la formulation) d'au moins une dispersion aqueuse de résine non fonctionnelle ou hydroxyfonctionnelle,
B) 5 à 40 % en poids (par rapport au poids total de la formulation) d'au moins un composant durcisseur présentant une teneur en groupe isocyanate libre de 10 à 23 % en poids (par rapport à la résine solide),
C) des charges, pigments, auxiliaires et additifs dans des proportions telles que la somme soit égale à 100 %,
**caractérisée en ce que** le composant A) contient :
i) au moins un composé aziridine polyfonctionnel en tant qu'agent de réticulation et
ii) au moins un composé amine, en tant que catalysateur, qui présente au moins un atome d'azote tertiaire et au moins un groupe hydroxyle.

2. Formulation aqueuse de peinture à deux composants, selon la revendication 1, **caractérisée en ce que** le composant A) contient un agent de réticulation polyaziridine i) avec au moins trois groupes aziridines par molécule.

3. Formulation aqueuse de peinture à deux composants, selon la revendication 1 ou 2, **caractérisée en ce que** le composé aziridine i) est présent dans une teneur de 0,5 à 3 % en poids (par rapport au poids total du composant A)).

4. Formulation aqueuse de peinture à deux composants selon l'une quelconque des revendications 1 à 3, **caractérisée en ce que** le composant A) contient un composé amine ii), en tant que catalysateur, avec au moins deux atomes d'azote par molécule.

5. Formulation aqueuse de peinture à deux composants selon l'une quelconque des revendications 1 à 4, **caractérisée en ce que** le composé amine ii) présente un poids moléculaire d'au moins 140 u.

6. Formulation aqueuse de peinture à deux composants selon l'une quelconque des revendications 1 à 5, **caractérisée en ce que** le composé amine ii) est présent dans une teneur de 0,2 à 2 % en poids (par rapport au poids total du composant A)).

7. Procédé pour fabriquer des pièces moulées dans un procédé de revêtement appliqué dans le moule, **caractérisé en ce qu'**une formulation de peinture, en tant que peinture de revêtement appliqué dans le moule, est utilisée selon l'une quelconque des revendications de 1 à 6.

8. Procédé pour fabriquer des pièces moulées dans un procédé de revêtement appliqué dans le moule selon la revendication 7, **caractérisé en ce qu'**il est appliqué, en tant que peinture de revêtement appliqué dans le moule, une formulation de peinture, selon l'une quelconque des revendications de 1 à 6, dans une épaisseur de couche de 10 à 100 µm (par rapport à l'épaisseur du film sec), sur une surface du moule, à une température de 60-80°C, et qu'après un temps d'évaporation approprié, et après un temps de séchage consécutif, dans le cas d'un moule fermé, inférieur à 4 minutes, une couche d'élastomère polyuréthanne ou une autre couche d'un matériau plastique est appliquée sur la couche de peinture, qui, le cas échéant, est retirée avec la couche de peinture du moule après constitution ultérieure de la couche ou étapes de procédé.

9. Procédé pour fabriquer des pièces d'habitacles d'automobiles avec un revêtement appliqué dans le moule ou une couche appliquée dans le moule d'une peinture, **caractérisé en ce qu'**il est utilisé, en tant que peinture de revêtement appliqué dans le moule, une formulation de peinture selon l'une quelconque des revendications 1 à 6.

10. Procédé pour fabriquer des peaux en polyuréthanne avec un revêtement appliqué dans le moule d'une peinture, **caractérisé en ce qu'**il est utilisé, en tant que peinture de revêtement appliqué dans le moule, une formulation de peinture selon l'une quelconque des revendications 1 à 6.

11. Peau en polyuréthanne, revêtue d'une formulation de peinture selon l'une quelconque des revendications 1 à 6.

12. Pièce moulée, obtenue par revêtement avec une formulation de peinture selon l'une quelconque des revendications 1 à 6 dans un procédé de revêtement appliqué dans le moule.
